(19) Europäisches Patentamt
European Patent Office
Office européen des brevets

(11) EP 4 270 944 B1

(12) **EUROPEAN PATENT SPECIFICATION**

(45) Date of publication and mention
of the grant of the patent:
**09.04.2025 Bulletin 2025/15**

(21) Application number: 23196480.0

(22) Date of filing: **28.06.2019**

(51) International Patent Classification (IPC):
***H04N 13/395*** (2018.01)    ***H04N 13/122*** (2018.01)

(52) Cooperative Patent Classification (CPC):
**H04N 13/395; H04N 13/122**

(54) **METHOD AND SYSTEM FOR FORMING EXTENDED FOCAL PLANES FOR LARGE VIEWPOINT CHANGES**

VERFAHREN UND SYSTEM ZUR HERSTELLUNG ERWEITERTER FOKALEBENEN FÜR GROSSE BLICKPUNKTÄNDERUNGEN

PROCÉDÉ ET SYSTÈME DE FORMATION DE PLANS FOCAUX ÉTENDUS POUR DE GRANDS CHANGEMENTS DE POINT DE VUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2018 US 201862694722 P**

(43) Date of publication of application:
**01.11.2023 Bulletin 2023/44**

(62) Document number(s) of the earlier application(s) in accordance with Art. 76 EPC:
**19749469.3 / 3 818 695**

(73) Proprietor: **InterDigital VC Holdings, Inc.
Wilmington, DE 19809 (US)**

(72) Inventors:
• **VALLI, Seppo T.
02130 Espoo (FI)**
• **SILTANEN, Pekka K.
00610 Helsinki (FI)**

(74) Representative: **AWA Sweden AB
Box 45086
104 30 Stockholm (SE)**

(56) References cited:
**US-A1- 2008 252 556    US-A1- 2011 075 257
US-A1- 2015 153 559**

• **JEN-HAO RICK CHANG ET AL: "Towards Multifocal Displays with Dense Focal Stacks", ARXIV.ORG, CORNELL UNIVERSITY LIBRARY, 201 OLIN LIBRARY CORNELL UNIVERSITY ITHACA, NY 14853, 27 May 2018 (2018-05-27), XP081197026, DOI: 10.1145/3272127.3275015**

**Description**

**CROSS-REFERENCE TO RELATED APPLICATIONS**

The present application is a non-provisional filing of, and claims benefit under 35 U.S.C. § 119(e) from, U.S. Provisional Patent Application No. 62/694,722, filed July 6, 2018, entitled "Method and System for Forming Extended Focal Planes for Large Viewpoint Changes".

**BACKGROUND**

Forming and using multiple focal planes (MFPs) is one approach for avoiding vergence-accommodation conflict, enabling viewers to naturally focus in image information along depth dimension. The approach may be particularly useful in near-eye (glasses) displays.

MFP displays create a stack of discrete focal planes, composing a 3D scene from layers along a viewer's visual axis. A view to the 3D scene is formed by projecting the pixels (or voxels) which are visible to the user at different depths and spatial angles.

Each focal plane displays a portion of the 3-D view representing a depth range that corresponds to the respective focal plane. Depth blending is a method used to smooth out the quantization steps and contouring when seeing views compiled from discrete focal planes, making it less likely that user will perceive the steps. Depth blending is described in greater detail in K. Akeley et al., "A Stereo Display Prototype with Multiple Focal Distances", ACM Transactions on Graphics (TOG), v.23 n.3, August 2004, pp. 804-813, and Hu, X., & Hua, H. (2014). Design and assessment of a depth-fused multi-focal-plane display prototype. IEEE/OSA Journal of Display Technology, 10(4), 308-316.

When using depth blending, rendering a relatively small number of focal planes (e.g. 4-6 planes) has been found to be enough for acceptable quality. This number of focal planes is also technically feasible.

Multiple focal plane displays may be implemented by spatially multiplexing a stack of 2-D displays or by sequentially switching - in a time-multiplexed way - the focal distance of a single 2-D display. Changes to the focal distance of a single 2-D display may be implemented by a high-speed birefringent (or other varifocal element) while spatially rendering the visible parts of corresponding multifocal image frames. Without depth blending, it is desirable to use a higher number of focal planes, e.g. 14 or more, as described in J. P. Rolland et al., "Multifocal planes head-mounted displays," Appl. Opt. 39, 3209-3215 (2000).

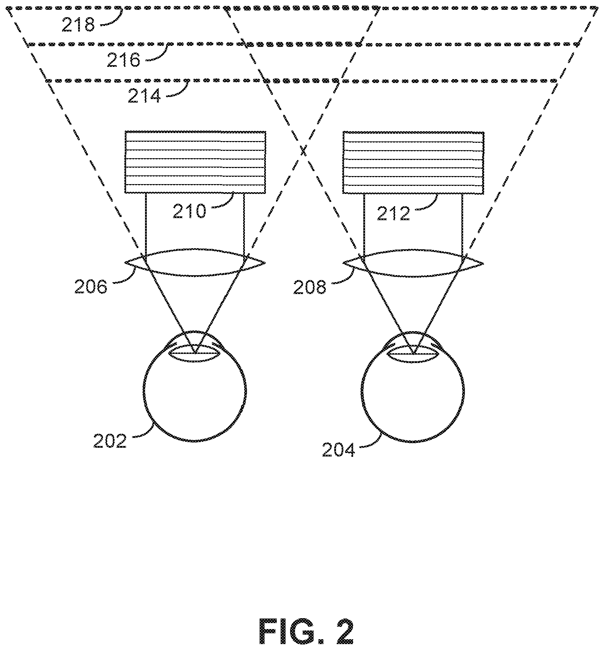

The human visual system (HVS) favors placing focal planes at regular distances on dioptric scale. On the other hand, depth information is usually easiest to capture using a linear scale. Both options may be used in MFP displays. An example of an MFP near-eye display is illustrated schematically in FIG. 2. FIG. 2 illustrates a display viewed by a user's left eye 202 and right eye 204. Respective eyepieces 206, 208 are provided for each eye. The eyepieces focus images formed by respective image stacks 210, 212. The image stacks form different images at different distances from the eyepieces. To the user's eyes, the images appear to originate at different virtual image planes, e.g. image planes 214, 216, 218.

MFP displays create an approximation for the light-field of the displayed scene. Because a near-eye-display moves along with a user's head movements, it is sufficient for only one viewpoint to be supported at each moment. Correspondingly, the approximation for the light field is easier, as capturing a light-field for large number of viewpoints is not needed.

SUMMARY

The disclosure describes method and systems for capturing and displaying content for multiple focal plane (MFP) displays. Unless explicitly indicated as "embodiment(s) according to the claimed invention", any embodiment, example, aspect, or implementation in the description may include some but not all features as literally defined in the claims and are present for illustration purposes only. In the embodiments according to the claimed invention, content is generated from focus stacks (images captured with varying focal lengths). Some embodiments can produce a reduced amount of disocclusions and holes when shifting MFPs for large synthesized disparities or viewpoint changes.

In some embodiments, focus images are captured with a large aperture, so that some image information is obtained from behind occluding objects.

Some embodiments also perform large-aperture depth sensing, which may be accomplished by large-aperture depth sensors, by applying defocus maps, or by using a suitable filtering and redistribution scheme for focus stacks and/or focal planes formed therefrom. In some embodiments, filtering is applied to focus stack images prior to forming redistributed focal planes. In some embodiments, filtering is applied after forming focal planes. Filtering results are then used for forming redistributed focal planes (or more generally high-frequency and/or redistributed focal planes).

One example operates as follows. A plurality of texture images $p_i$ of a scene are obtained, with each texture image having a different respective focal distance $d_i$. The texture images may be, for example, RGB images or greyscale images, among other options. For each texture image $p_i$, a focal plane image $q_i$ is generated. To generate a focal plane image $q_i$, each pixel (x,y) in texture image $p_i$ is weighted by a weight $w_i(x,y)$. Each pixel value $p_i(x,y)$ of the texture image $p_i$ is multiplied by the respective weight $w_i(x,y)$ to generate the focal plane image $q_i$ such that $q_i(x,y)=p_i(x,y)\cdot w_i(x,y)$.

The weight $w_i(x,y)$ may represent an amount by which the pixel (x,y) is in focus in texture image $p_i$. Different techniques may be used to determine the amount by which the pixel (x,y) is in focus in texture image $p_i$. In some such techniques, a depth $z_i(x,y)$ of pixel (x,y) is measured or otherwise determined, and the weight $w_i(x,y)$ is a function of the depth, such that $w_i(x,y)=w_i[z_i(x,y)]$. The function $w_i[z]$ may be a blending function as used in known multi-focal displays. In some embodiments, the function has a maximum value (e.g. a value of 1) at $w_i[d_i]$, indicating the likelihood that a pixel is most in focus when its measured depth is the same as the focal distance. The value of $w_i[z]$ may decrease monotonically as z either increases or decreases from the focal distance $d_i$, giving a lower weights for pixel depths that are farther from the focal distance and less likely to be in focus. Pixels with depth values that are sufficiently offset from the focal plane may be given a weight of zero (even if some level of focus is discernable).

In some embodiments, the amount by which the pixel (x,y) is in focus in texture image $p_i$. is determined by generating a defocus map that assigns a level of focus (or level of de-focus) to each pixel in the texture image $p_i$. The most in-focus pixels may be given, for example, a weight of one, and more out-of-focus pixels may be given a weight as low as zero.

A set of N focal plane images $q_0 \ldots q_i \ldots q_{N-1}$ may be generated using the techniques described herein and may be displayed on a multi-focal-plane display. Depending on the type of display, the focal plane images may be displayed simultaneously or in rapidly-cycling sequence using time multiplexing.

In some embodiments, the set of available texture images $p_i$ may be greater than the number of available (or desired) display planes in a multi-focal-plane display. In such a case, a method may include selecting one focal plane image for each display plane. For each display plane, a selection may be made of the texture image having a focal distance that is the same as or closest to the focal distance of the display plane.

In some embodiments, a virtual viewpoint is generated by laterally shifting at least a first one of the focal plane images with respect to at least a second one of the focal plane images. For example, a focal plane image may be shifted laterally by an amount inversely proportional to the display focal distance of the respective focal plane image (i.e., the focal distance of the display plane of the focal plane image). A virtual viewpoint may be used as one or both of a stereo pair of viewpoints. A virtual viewpoint may also be generated in response to viewer head motion to emulate motion parallax.

In some embodiments, each texture image $p_i$ and the respective corresponding depth map $d_i$ are captured substantially simultaneously. Each texture image and the respective corresponding depth map may be captured with the same or similar optics. Each texture image and the respective corresponding depth map may be captured with optics having the same aperture.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 2 is a schematic illustration of a multi-focal near-eye display that may be used in some embodiments.

FIGs. 3A-3D are schematic representations of different texture images of the same scene. FIG. 3A is a schematic representation of an extended depth of field image of the scene. FIGs. 3B-3D are schematic representations of images of the scene captured with a larger-aperture camera focused at different distances.

FIGs. 4A-4D are schematic illustrations representing depth maps captured with different focal distances. The schematic depth maps illustrated in FIGs. 4A-4D correspond to the respective texture images illustrated in FIGs. 3A-3D.

FIGs. 5A-5C are schematic illustrations of focal weight maps generated from the depth maps of FIGs. 4B-4D, respectively.

FIG. 6A schematically illustrates the generation of a focal plane image from the texture image of FIG. 3B and the focal weight map of FIG. 5A.

FIG. 6B schematically illustrates the generation of a focal plane image from the texture image of FIG. 3C and the focal weight map of FIG. 5B.

FIG. 6C schematically illustrates the generation of a focal plane image from the texture image of FIG. 3D and the focal weight map of FIG. 5C.

FIG. 7 schematically illustrates the display of the focal plane images of FIGs. 6A-6C to a user.

FIG. 8 is a flow diagram illustrating a method of generating and displaying focal plane images in some embodiments.

FIG. 9 is a schematic illustration of different focal distances encountered in some embodiments.

FIG. 10 is a flow diagram illustrating a method of generating and displaying focal plane images in some embodiments according to the claimed invention.

FIG. 11 is a flow diagram illustrating a method of generating and displaying focal plane images in some embodiments.

FIG. 12 is a flow diagram illustrating a method of generating and displaying focal plane images in some embodiments.

FIGs. 13A-13C illustrate examples of the focal weight $w_i(x,y)$ as a function of the depth $z_i(x,y)$ for different focal planes in some embodiments.

FIGs. 14A-14C illustrate examples of the focal weight $w_i(x,y)$ as a function of the depth $z_i(x,y)$ for different focal planes in additional embodiments.

## EXAMPLE NETWORKS FOR IMPLEMENTATION OF THE EMBODIMENTS

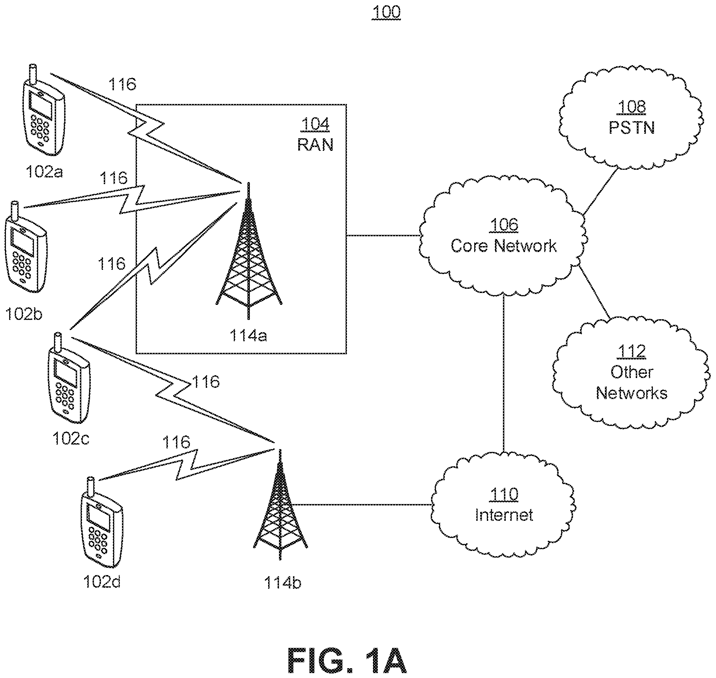

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

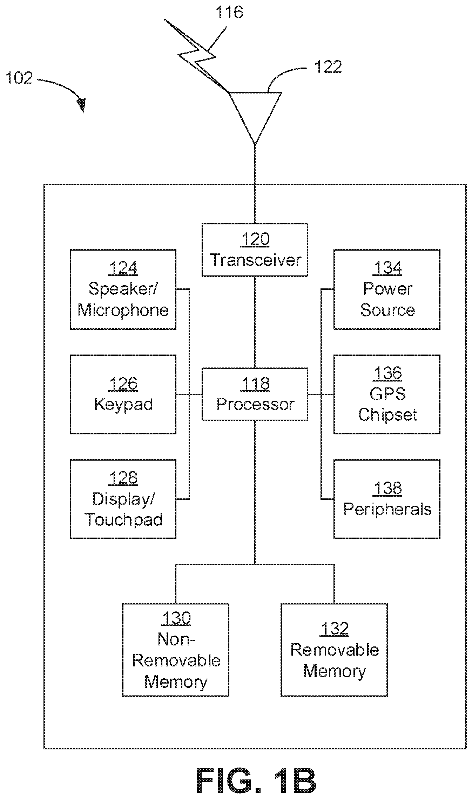

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

Although the WTRU is described in FIGs. 1A-1B as a wireless terminal, it is contemplated that in certain representative embodiments that such a terminal may use (e.g., temporarily or permanently) wired communication interfaces with the communication network.

In representative embodiments, the other network 112 may be a WLAN.

In view of Figures 1A-1B, and the corresponding description, one or more, or all, of the functions described herein may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

## DETAILED DESCRIPTION

### Effects of Using Large Aperture in Image Capture.

A practical camera using a finite aperture produces images with certain depth of field (DoF). Depth of field may be described as a span of distances from the capture point, inside which the pixels are in focus. Outside the DoF, the pixels become defocused or blurred.

When camera parameters are known, known formulas may be used to calculate or estimate DoF.

At one extreme, an idealized pinhole camera is a camera with infinitely small aperture. An ideal pinhole camera produces an image with infinitely large DoF, and all pixels in focus regardless of their depth. In practice, under very well-lit conditions, a pinhole camera can be approximated by using a small aperture in a physical camera.

In practical imaging conditions, approximating a pinhole image can be accomplished by capturing and combining focus stack images, images with several focal lengths. Various algorithms exist to combine these images into one extended-focus image. An extended-focus image is formed using a discrete set of focus captures.

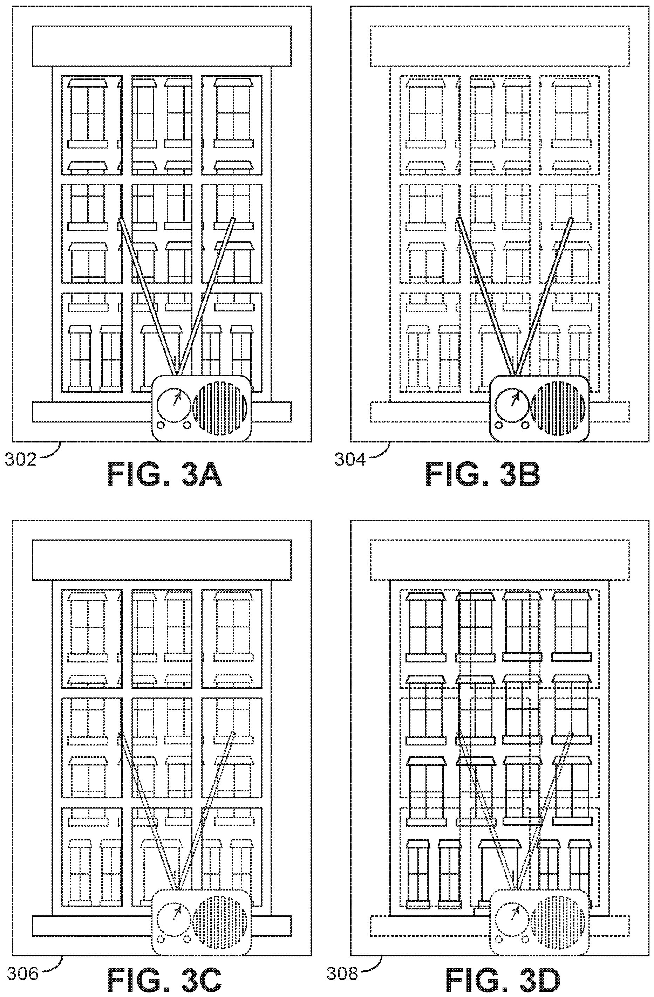

FIG. 3A is a schematic representation of a pinhole image 302 of a scene that includes a nearby radio, a window frame at an intermediate distance, and a building at a greater distance. Due to the small aperture of a pinhole camera, the objects at all distances are in focus.

FIGs. 3B-3D are schematic representations of images of the same scene captured with a larger-aperture camera focused at different distances. In some embodiments, the images of FIGs. 3B-3D are captured simultaneously or substantially simultaneously (or, in the case of a virtual image, generated to represent substantially the same moment in time).

FIG. 3B is a schematic representation of an image 304 focused at a near distance $f_1$. The radio itself is in focus (illustrated with solid lines) while the more distant window frame and building are at least partly out of focus (illustrated with dashed lines).

FIG. 3C is a schematic representation of an image 306 focused at an intermediate distance $f_2$. The window frame is in focus, but the nearby radio and the more distant building are at least partly out of focus. As is also schematically represented in FIG. 3C, given the non-zero aperture size, the in-focus window frame is partly visible "through" the out-of-focus antenna of the radio. While this effect is most noticeable among narrow objects (such as the radio antenna), it is also noticeable around the edges of larger real-world objects. However, to preserve the clarity and reprodcibility of the present drawings, the effect is illustrated here only for narrow objects.

FIG. 3D is a schematic representation of an image 308 focused at a greater distance $f_3$. The nearby radio and slightly more distant window frame are out of focus, but the building visible through the window is in focus. Given the aperture size, the narrow muntins (horizontal and vertical crosspieces) of the window frame appear at least partially transparent, as does the radio antenna. As a result, the captured image contains information about a greater proportion of the building, as compared to the pinhole image of FIG. 3A.

FIGs. 3A-3D illustrate the effect of occlusions in different focal captures. FIGs. 3A-3D show that occlusions caused by close objects do not remain the same when varying the focal distance. For example, in the image of FIG. 3D, focused on the distant building, occlusions such as the muntins and the radio antenna appear eroded and filtered, revealing more background details as compared to the images of FIGs. 3B and 3C, which are focused to nearer distances.

Images such as those represented by FIGs. 3A-3D, which may contain information such as color and brightness information (e.g. luma and chroma information or RGB information) but do not contain depth information are referred to herein as texture images. In some cases, where image data includes both texture and depth information (e.g. an RGBD image), the term texture image may be used to refer to a portion of that image data that contains the brightness and/or color information.

## Depth Measurement Techniques.

Some types of depth sensors use conventional camera optics and produce depth maps which correspondingly resemble photos by their focal properties. In general, small apertures have been favored for depth sensing in order to get a depth map which is in focus over a large depth of field (DoF). A large aperture would increase sensitivity and range, but would also reduce DoF.

An example of a depth sensor system with a relatively large aperture is described in S. Honnungar et al., "Focal-sweep for Large Aperture Time-of-Flight Cameras", IEEE International Conference on Image Processing (ICIP), 2016, pp. 953-957. Such large-aperture time-of-flight cameras may be used for depth sensing in some embodiments.

One example of a device capable of generating a depth map (indicating pixel distances from a capture device) is a Kinect sensor. Depth maps may be used when decomposing views into focal planes (MFPs). An alternative technique is to take camera-based focal captures and to use filtering and other image processing means to derive a depth map using a "depth from focus" approach.

One property of a defocus map is that it shows objects with the same defocus value, despite being the same distance behind or in front of the focal distance. Another property is that defocus map values - although nonlinear with respect to depth - can be mapped to linear distances by using information on the camera parameters (aperture, focal length, etc.) as described in Shaojie Zhuo, Terence Sim, "Defocus map estimation from a single image", Pattern Recognition 44 (2011), pp. 1852-1858.

## Issues Addressed in Some Embodiments.

Multi-focal-plane (MFP) representations provide benefits of supporting viewer accommodation without the extreme bandwidth and capture challenges of complete light field representations. A limitation of current MFP approaches is not fully preserving information present in the whole light field due for instance to loss of information due to occlusions.

Existing MFP approaches generally use one texture image with a corresponding depth map as input. In addition to several other quality-affecting parameters, the accuracy of acquiring each texture image limits the quality of corresponding MFP decomposition process and its result, focal planes.

Further, current approaches in general do not exploit additional information provided by focus stacks, sets of images captured with varying focal distances from one view. In particular, current approaches in general do not exploit the additional information provided by focus stacks captured with large apertures. This leads to a loss of information that otherwise can be captured behind or through occluding objects or structures when using large aperture captures.

In conventional MFP approaches, the depth map is formed from a "pinhole viewpoint", and the same segmentation (occlusion) is used in forming MFPs at every distance. In order to capture more information from the scene, some examples described herein use several focal captures (referred to as a focus stack) and individual depth based segmentations (depth maps) for each of the captured images.

Forming and using MFPs is an approach used to avoid vergence-accommodation conflict so as to enable viewers to naturally focus on image information in depth dimension. The approach is particularly useful in near-eye (glasses) displays. Rendering a relatively small number of MFPs (4-6) is found to be enough for quality while being technically feasible.

In current approaches for MFP formation, a texture image and corresponding pixel distances (depth map) are generally used. In some cases, this information is virtual and produced using 3D modelling, resulting in a texture that is everywhere in focus (referred to as all-in-focus content).

3D information may also be captured form real-world views. The view may be captured by a physical camera with one focal distance, aperture, and other parameters, which result in a texture image that is in focus only at certain distance from the capture device. Correspondingly, the content is not all-in-focus.

**Overview** of **Embodiments.**

Examples of procedures and systems described herein operate to form multiple focal planes (MFPs) using focus stacks (images with varying focal distances) as input. In one example, a plurality of conventional MFP formation processes are performed in parallel for each of the focus stack images, and pixels and depths that are best in focus are used.

Capturing of the scene with varying focal distances may apply also to the depth sensor, which in some embodiments uses relatively large aperture optics with variable focal length.

Depth based decomposition uses different segmentations (depth maps) for each texture image. Correspondingly, the resulting MFPs in some embodiments use all focus stack images and (most of) their information contents. In particular, more information is captured to focal planes around occlusions than in conventional MFP approaches.

In general, a larger aperture results in capturing more image information behind occluding object edges. This information extends the focal plane images and produces some overlap between them. When focal plane images are superimposed, this overlap may appear as some lightening near object edges. Depending on the desired use, there may be an optimum amount of overlap regarding the perceived image quality. Correspondingly, aperture size may be chosen to be sufficient to capture enough of the occluded areas without unduly highlighting or enhancing object edges.

In some embodiments, due to using a relatively large aperture in capturing multiple focus stack images, information behind occluding objects or image areas is also captured and delivered to the MFP formation process. Unlike when combining focus stack images into one extended focus image, this extra information is preserved in the process and results in an MFP stack with extended amount of information, referred to herein as an extended MFP stack with extended focal planes.

Some embodiments use a focus stack (a series of texture images), and a series of corresponding depth maps as input. Focus stack images may be captured by taking a series of texture images with different focal distances, or parsing them from a light field captured from the view. The series of texture images and corresponding depth maps are transmitted after applying a suitable compression scheme to the data.

In a conventional MFP process, a single texture image is multiplied by the focal weight map originating from a single depth map. In some embodiments, on the other hand, a series of texture images captured with different focal lengths corresponds with a series of slightly different depth maps and focal weight maps. Depth maps are captured using a relatively large aperture and varying focal lengths. In some embodiments, the same aperture and focal lengths (optics) are used as for the texture images in the focus stack.

The received depth maps are used to generate focal weight maps that are used for forming and blending of focal planes (MFPs). Each texture image in the focus stack is multiplied with the corresponding focal weight map to form the corresponding focal plane image. In some embodiments, each texture image is multiplied with a focal weight map, which has been formed from a depth map captured from/for the same focal distance.

Conventional MFP approaches decompose either one image with one focal distance, or one extended focus image (either a virtually modeled scene, or a compilation of several texture images). A considerable amount of information behind occluding objects or areas does not enter into MFP formation process.

In some embodiments, each focal plane image is formed using its corresponding focal capture as input. In addition to gathering accurate information from all focal distances, the approach exploits also information, which is behind occluding objects or areas. Focal planes generated using techniques described herein are called extended MFPs.

Embodiments used herein may be employed in systems that use focal planes to generate virtual viewpoint changes. Generation of virtual viewpoint changes may be performed for laterally-displced viewpoints by shifting MFPs sideways with respect each other. Shifting is made by an amount depending on the chosen amount of viewpoint change (disparity) and on each MFP's distance from the viewer. In some embodiments, generation of virtual viewpoint changes may be performed for viewpoints that are displaced in a forward or rearward direction by scaling of the MFPs, with nearer MFPs being scaled by a greater amount than more distant MFPs.

The shifting of extended MFPs may result in a reduced level of disocclusions or holes as compared to shifting of conventional MFPs. Correspondingly this benefit may be used to increase the amount of disparity in virtual viewpoint change.

Some existing approaches use focal captures as input to an MFP decomposition procedure, but have been limited to aperture sizes typical for a human eye (on the order of 3-4 mm in normal viewing conditions). These approaches do not operate to exploit the inpainting effect (reducing holes), enabled by focal planes extending behind occluding objects.

Some embodiments benefit from using a large aperture when capturing focus stacks. A light field is also a feasible option for providing large aperture images with varying focal distances. Unlike light field solutions based on transmitting all captured data, some embodiments produce MFPs which operate as approximations of light fields, which can be compressed and transmitted effectively.

Due to an acceptable technical complexity, and good rendering quality, MFP displays are a very feasible approach for supporting natural accommodation to 3D content. Using MFPs is thus also a very natural choice to be supported by capture and transmission.

Filtering-based embodiments may operate to capture focal properties also for possible non-Lambertian phenomena in the scene (e.g. showing correct focus also for reflected and refracted image information).

**Example Image Processing and Display Method.**

*Capturing a Set* of *N Images with Varying Focal Lengths.*

Some embodiments exploit additional information acquired from the scene when using a relatively large aperture image capture. Relatively large aperture here refers to an aperture substantially larger than that of a human eye, which is about 3mm in normal conditions. For example, an aperture diameter of 1cm or greater may be used. In some embodiments, an aperture of about 36 mm may be used. In some embodiments, the aperture is in the range of one to a few centimeters.

A set of N texture images is captured of a scene, with focal distances $f_1, f_2 ... f_N$. For example, the texture images of FIGs. 3B, 3C, and 3D may be captured with respective focal distances $f_1, f_2, f_3$. In this example, N is the same, relatively small number used for focal planes in MFP formation and rendering. For simplicity, in this example, MFPs are displayed at the corresponding distances $d_i$, with $d_1 = f_1$, $d_2 = f_2 ... d_N = f_N$.

When varying focal distance, the obtained texture images are in focus at corresponding distances. Due to the large aperture used, each texture image may contain also some information from behind occluding object edges, such as the portions of the building in FIG. 3D that are obscured by foreground objects. Later in the process, this information ends up to the corresponding focal planes (MFPs). In some examples, the notation $p_i$ is used to refer to a texture image indexed by value i, with $p_i(x,y)$ being a pixel value (e.g. a brightness value or RGB value, among other possibilities) at position (x,y) within that texture image.

*Capturing or Forming N Depth Maps.*

In this example, for each of the N texture images, a separate depth map is captured. With different focal distances, the optimal segmentation of the scene and the corresponding allocation of pixels in depth may be different.

In some examples, the notation $z_i$ is used to refer to a depth map that corresponds to texture image $p_i$. In some embodiments, the depth map $z_i$ is captured using the same focal distance $d_i$ that is used for corresponding texture image $p_i$. The depth map may be captured using, among other options, a time-of-flight camera or a structured light camera. The notation $z_i(x,y)$ is used in some examples to refer to the depth recorded for position (x,y) within that texture image.

In a depth map captured with a large aperture size (e.g. 1cm or greater), a boundary between a nearer object and a more distant object may be "blurred." For example, even if there is in reality a sharp boundary between the nearer and the more distant object, a depth map captured with a large aperture may demonstrate a gradual transition in measured distances across pixels. For example, in the case of a time-of-flight camera as used in Honnungar et al., pixels near the boundary may measure a superposition of temporally-modulated light, combining light reflected from the nearer object with light reflected from the more distant object. In processing the received light to measure the "time-of-flight" (e.g. according to equation 1 of Honnungar et al.), the result may reflect a depth that is between the depth of the nearer object and the depth of the more distant object. While such a "blurring" of depth values may have been viewed as undesirable in prior systems, the effect is used in some examples described herein to advantageously form extended focal planes for display while reducing the appearance of holes or gaps between focal planes.

Focal distance of the depth sensing optics is adjusted so that each of the N depth maps are in focus at the same distance as the corresponding focus capture image. As a large aperture is used, depth values may be obtained also for pixels/areas occluded by closer objects.

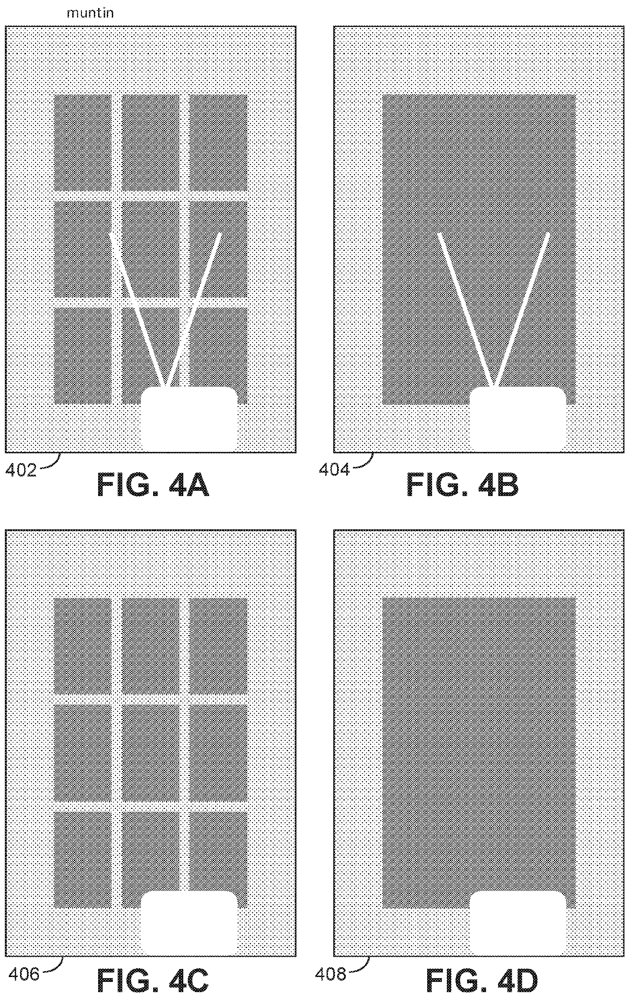

FIGs. 4A-4D are schematic illustrations representing depth maps captured with different focal distances. The schematic depth maps illustrated in FIGs. 4A-4D correspond to the respective texture images illustrated in FIGs. 3A-3D.

FIG. 4A represents a "pinhole" depth map 402 of the scene of FIGs. 3A-3D captured with a very small aperture and substantially infinite depth of focus. More distant regions are indicated with darker hatching and nearer regions are indicated with lighter hatching (or absence of hatching for the nearest regions).

FIG. 4B is a schematic illustration of a depth map 404 captured using the same aperture and focal distance $f_1$ that was used in capturing the texture image of FIG. 3B. Specifically, the depth map of FIG. 4B is focused on the radio in the foreground. The more distant window muntins are out of focus and thus appear at least partially transparent to the depth camera. (For the sake of illustration, the muntins are treated as fully transparent in the schematic view of FIG. 4B.)

FIG. 4C is a schematic illustration of a depth map 406 captured using the same aperture and focal distance $f_2$ that was used in capturing the texture image of FIG. 3C. Specifically, the depth map of FIG. 4C is focused on the window frame at an intermediate distance. The radio is nearer to the camera than the focal distance. As a result, the radio antenna appears at least partially transparent to the depth camera. (For the sake of illustration, the antenna is treated as fully transparent in the schematic view of FIG. 4C.)

FIG. 4D is a schematic illustration of a depth map 408 captured using the same aperture and focal distance $f_3$ that was used in capturing the texture image of FIG. 4D. Specifically, the depth map of FIG. 4D is focused on the building in the background. The radio and the window frame are nearer to the camera than the focal distance. As a result, the radio antenna and window muntins appear at least partially transparent to the depth camera. (For the sake of illustration, the antenna and muntins are treated as fully transparent in the schematic view of FIG. 4D.)

*Producing N Focal Weight Maps.*

Depth blending may be accomplished by applying depth blending functions to depth maps, e.g. as described in Kurt Akeley, Simon J. Watt, Ahna Reza Girshick, and Martin S. Banks (2004), "A Stereo Display Prototype with Multiple Focal Distances", ACM Transactions on Graphics (TOG), v.23 n.3, August 2004, pp. 804-813. In some embodiments, linear filters (also referred to as tent filters) are used, although non-linear filters may be used in some embodiments.

In some embodiments, depth maps are used to generate focal weight maps (e.g. N focal weight maps) indicating weights by which image pixels contribute to each focal plane image.

In some such embodiments, those pixels exactly at the focal plane's distance contribute only to the corresponding focal plane (with full weight w=1). Due to depth blending, pixels between two focal planes contribute to both of these planes by the weights (w1 and w2; w1+w2=1) expressed by the corresponding focal weight maps.

The notation $w_j(x,y)$ may be used to represent a focal weight of a pixel at position (x,y) with respect to a display focal plane indexed by j. In some examples, the focal weight map $w_j(x,y)$ is a function of depth, such that $w_j(x,y)=w_j[z_i(x,y)]$, where $z_i(x,y)$ is the depth of the pixel at position (x,y) in the depth map indexed by i (corresponding to the texture image indexed by i).

In some embodiments, each of the N depth maps, corresponding to the N images, is processed by N blending functions. Thus, a total of NxN focal weight maps may be generated, where each focal weight map in some examples may be represented by $w_{ij}(x,y)=w_j[z_i(x,y)]$, where i,j = 0,..., N-1. A feasible choice is to use only those focal weight maps corresponding to the focal distances of each texture image, so that each focal weight map in such embodiments may be represented by $w_j(x,y)=w_j[z_i(x,y)]$. Each such focal weight map contains information that is best in focus and accurate compared to any other focal weight map. In alternative embodiments, e.g. to provide desired visual effects, one or more focal weight maps may be selected that do not correspond to the focal distance of the texture image.

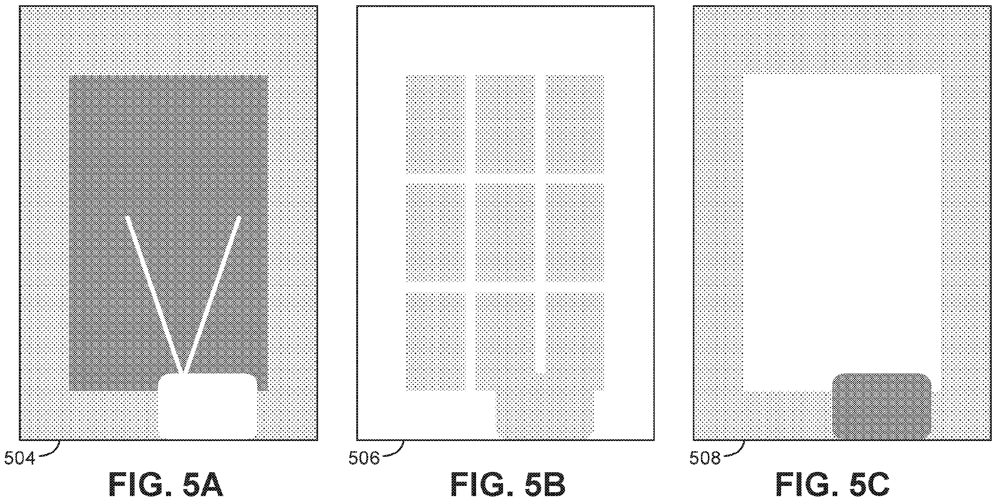

FIGs. 5A-5C are schematic illustrations of focal weight maps used together with the respective texture images of FIGs. 3B-3D to generate respective focal plane images for distances $f_1$, $f_2$, $f_3$. The focal weight maps provide weights that represent, for each region (e.g. pixel) of a texture image, an amount by which that region is in focus. In the illustrations of FIGs. 5A-5C, regions with higher weights (corresponding to more in-focus regions) are illustrated with lighter (or absent) hatching, while regions with lower weights (corresponding to more out-of-focus regions) are illustrated with darker hatching.

FIG. 5A schematically illustrates a focal weight map 504 used in generating a focal plane image for distance $f_1$. Regions with a depth that is close to distance $f_1$, as measured using the depth map of FIG. 4B (which was also captured with focal distance $f_1$), are given the highest focal weights. For example, because the radio is positioned substantially at distance $f_1$, the radio is in focus, and the regions (e.g. pixels) corresponding to the radio are given the highest focal weights. Other regions, such as the window frame and the background building are at greater distances, are more out of focus, and thus have lower focal weights.

FIG. 5B schematically illustrates a focal weight map 506 used in generating a focal plane image for distance $f_2$. Regions with a depth that is close to distance $f_2$, as measured using the depth map of FIG. 4C (which was also captured with focal distance $f_2$), are given the highest focal weights. For example, because the window frame is positioned substantially at distance $f_2$, the window frame is in focus, and the regions (e.g. pixels) corresponding to the window frame are given the highest focal weights. The radio is out of focus because it is closer than distance $f_2$, and the background building is out of focus because it is at a greater distance than $f_2$, so those areas have lower focal weights.

FIG. 5C schematically illustrates a focal weight map 508 used in generating a focal plane image for distance $f_3$. Regions with a depth that is close to distance $f_3$, as measured using the depth map of FIG. 4D (which was also captured with focal distance $f_3$), are given the highest focal weights. For example, because the background building is positioned substantially at distance $f_3$, the building is in focus, and the regions (e.g. pixels) corresponding to the building are given the highest focal weights. Other regions, such as the window frame and the radio are at closer distances, are more out of focus, and thus have lower focal weights.

*Selection and Use of N Focal Plane Images.*

In some embodiments, focal plane images are formed by multiplying each texture image by the focal weight map corresponding to its focal distance. Formed this way, the focal planes contain also some information behind occluding object edges. The amount of such information is the bigger the larger the aperture is when capturing focal images (and sensing depth).

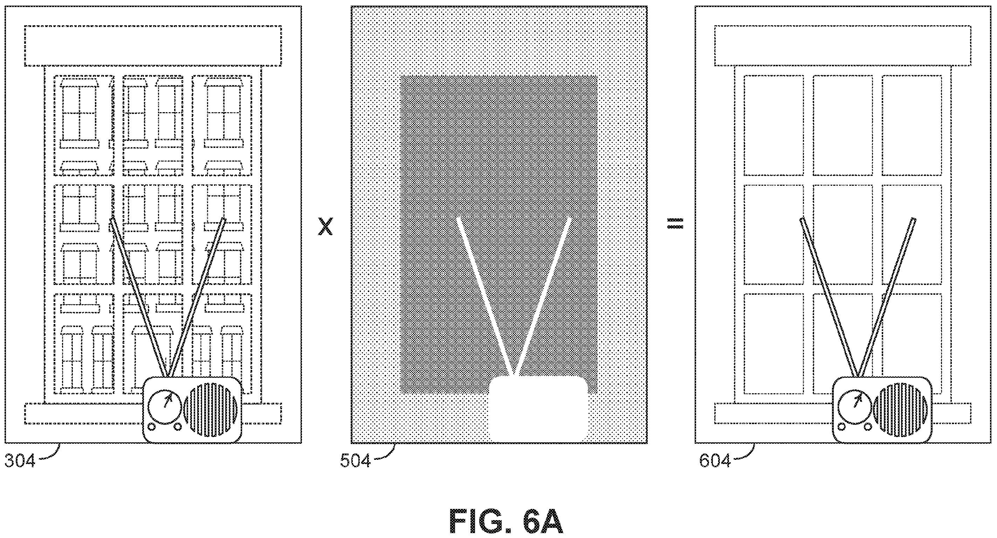

FIG. 6A schematically illustrates the generation of a focal plane image 604 for display at focal distance $f_1$. In this example, the focal plane image 604 is generated by multiplying texture image 304 by focal weight map 504 on a pixel-by-pixel basis (possibly after scaling or otherwise aligning the texture image and the focal weight map). The content most visible in the focal plane image 604 is primarily the radio, which was the object that was most in focus at focal distance $f_1$.

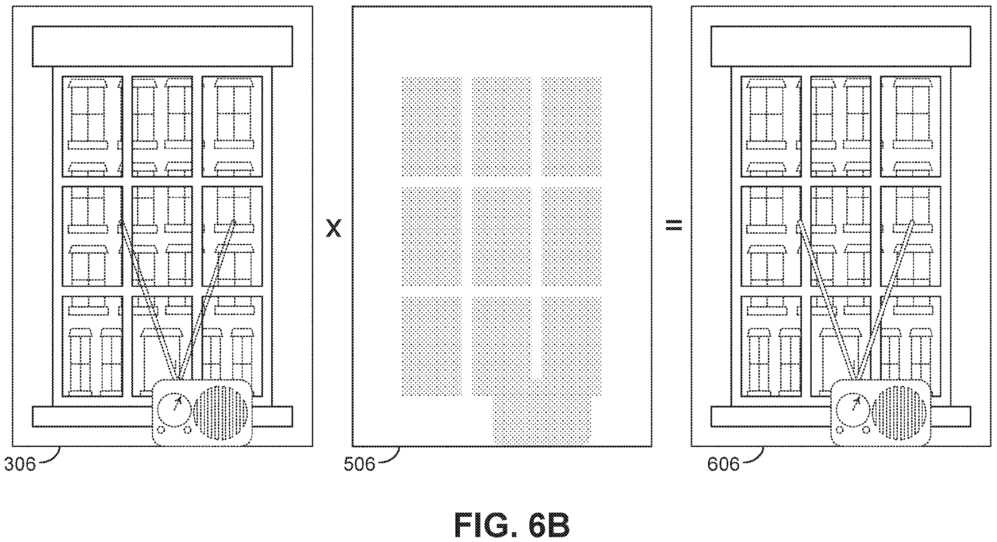

FIG. 6B schematically illustrates the generation of a focal plane image 606 for display at focal distance $f_2$. In this example, the focal plane image 606 is generated by multiplying texture image 306 by focal weight map 506. The content most visible in the focal plane image 606 is primarily the window frame, which was the object that was most in focus at focal distance $f_2$.

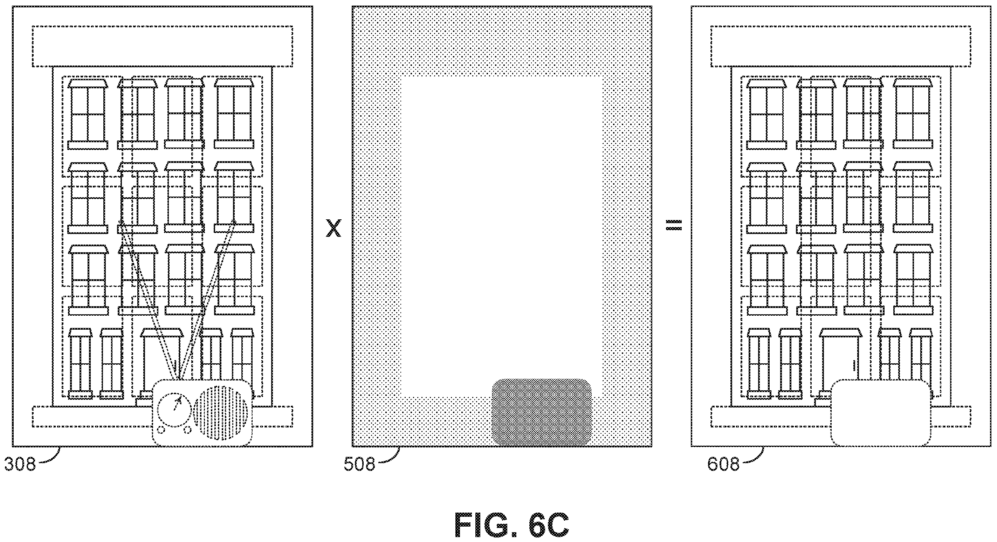

FIG. 6C schematically illustrates the generation of a focal plane image 608 for display at focal distance $f_3$. In this example, the focal plane image 608 is generated by multiplying texture image 308 by focal weight map 508. The content most visible in the focal plane image 608 is primarily the building, which was the object that was most in focus at focal distance $f_3$.

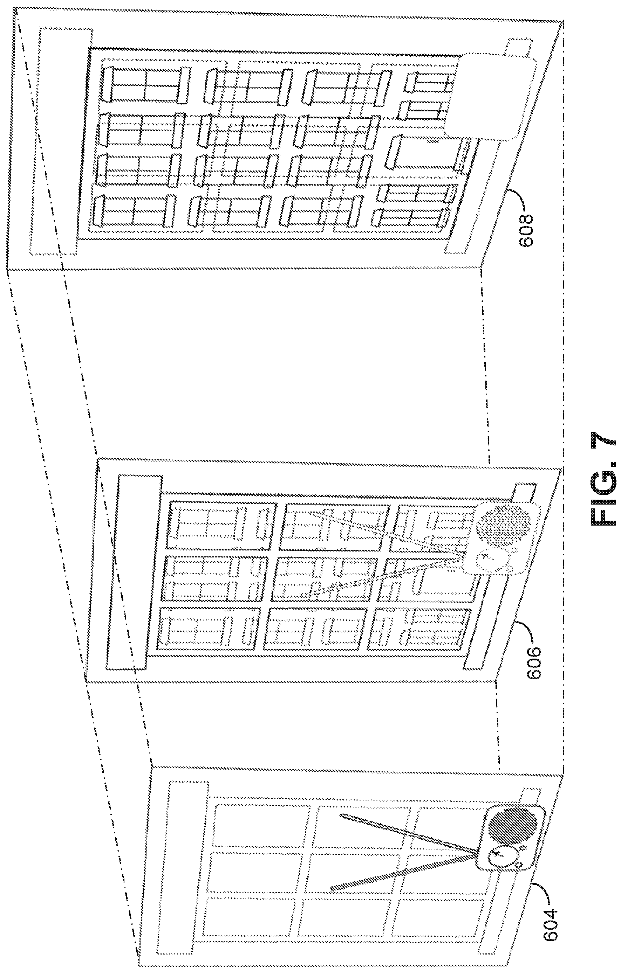

FIG. 7 schematically illustrates the display of a plurality of focal plane images to a user, e.g. using an MFP display such as that of FIG. 2. Specifically, in this example, focal plane image 604 is displayed at a focal plane nearest the user (to the left of the figure), focal plane image 606 is displayed at a focal plane more distant from the user, and focal plane image 608 is displayed at a distant focal plane. With respect to the user, focal plane image 604 may appear to be at a distance $f_1$ from the user, focal plane image 606 may appear to be at a distance $f_2$ from the user, and focal plane image 608 may appear to be at a distance $f_3$ from the user.

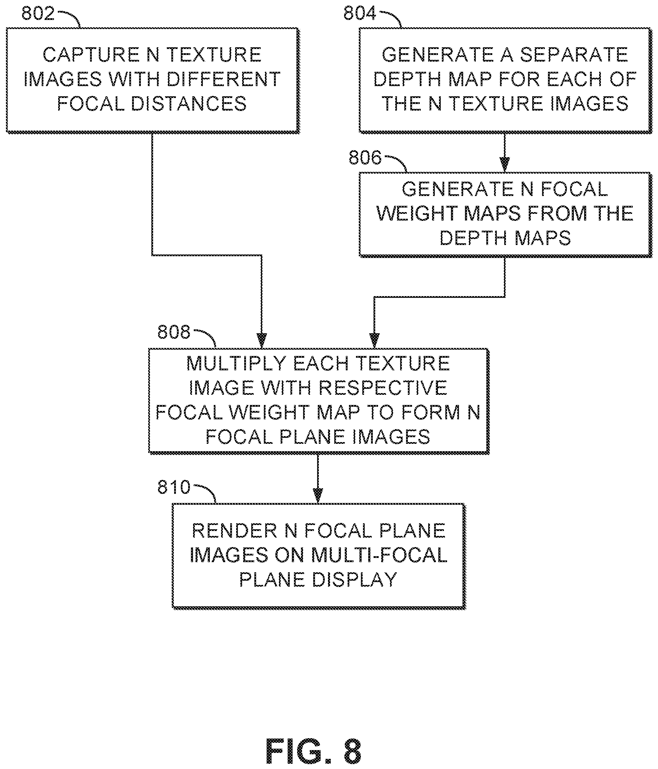

A processing method as used in the example of FIGs. 3-7 is illustrated in the flow diagram of FIG. 8. At 802, a number N of texture images is captured with different focal distances. At 804, a separate depth map is generated for each of the N texture images. In step 806, a focal weight map is generated from each of the depth maps. In step 808, each of the texture images is multiplied with an associated focal weight map to form N focal plane images. In step 810, the N focal plane images are rendered on a multi-focal plane display. In the case of a motion-parallax-enabled display, the focal plane images may be shifted laterally and/or scaled with respect to one another in response to lateral movement of the viewer to emulate motion parallax.

**Example Focal Weight Determination.**

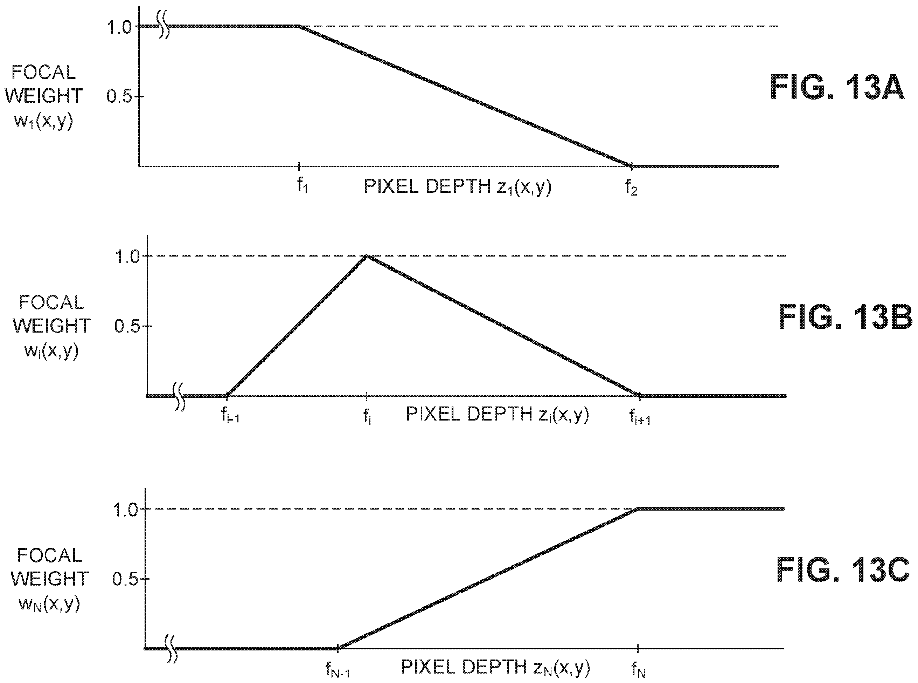

In the example illustrated in FIGs. 3-7, for each displayed focal plane at focal distance $f_i$, there was a single texture image captured with focal distance $f_i$ and a single depth map captured with focal distance $f_i$. (Or, other depth maps and texture images were captured but were not used to generate the displayed focal plane images.) Under such conditions, the focal weights used to populate the focal weight map may be calculated using a method as illustrated in FIGs. 13A-13C.

FIG. 13A is a graph of example focal weights $w_1(x,y)$ used for a focal plane with the smallest focal distance $f_1$ (nearest to the camera or viewer). Each focal weight $w_1(x,y)$ in this example is determined only by the respective pixel depth $z_1(x,y)$ captured by a depth camera that also has focal distance $f_1$. In this example, the second focal plane is at focal distance $f_2$. The focal weights $w_1(x,y)$ in this example are calculated as follows.

-

$$\text{If } z_1(x,y) \leq f_1 \text{, then } w_1(x,y) = 1.$$

•

$$\text{If } f_1 \leq z_1(x,y) \leq f_2 \text{, then } w_1(x,y) = [z_1(x,y) - f_2] / [f_1 - f_2].$$

•

$$\text{If } z_1(x,y) \geq f_2 \text{, then } w_1(x,y) = 0.$$

FIG. 13B is a graph of example focal weights $w_i(x,y)$ used for a focal plane with focal distance $f_i$ that is neither the nearest nor the most distant focal plane. Each focal weight $w_i(x,y)$ in this example is determined only by the respective pixel depth $z_i(x,y)$ captured by a depth camera that also has focal distance $f_i$. The nearer focal plane is at focal distance $f_{i-1}$ and the more distant focal plane is a focal distance $f_{i+1}$. The focal weights $w_i(x,y)$ in this example are calculated as follows.

•

$$\text{If } z_i(x,y) \leq f_{i-1} \text{, then } w_i(x,y) = 0.$$

•

$$\text{If } f_{i-1} \leq z_i(x,y) \leq f_i \text{, then } w_i(x,y) = [z_i(x,y) - f_{i-1}] / [f_i - f_{i-1}].$$

•

$$\text{If } f_i \leq z_i(x,y) \leq f_{i+1} \text{, then } w_i(x,y) = [z_i(x,y) - f_{i+1}] / [f_i - f_{i+1}].$$

•

$$\text{If } z_i(x,y) \geq f_{i+1} \text{, then } w_i(x,y) = 0.$$

FIG. 13C is a graph of example focal weights $w_N(x,y)$ used for a focal plane with focal distance $f_N$ that is the most distant focal plane. Each focal weight $w_N(x,y)$ in this example is determined only by the respective pixel depth $z_N(x,y)$ captured by a depth camera that also has focal distance $f_N$. The nearer focal plane is at focal distance $f_{i-1}$ and the more distant focal plane is a focal distance $f_{i+1}$. The focal weights $w_N(x,y)$ in this example are calculated as follows.

•

$$\text{If } z_N(x,y) \leq f_{N-1} \text{, then } w_N(x,y) = 0.$$

•

$$\text{If } f_{N-1} \leq z_N(x,y) \leq f_N \text{, then } w_N(x,y) = [z_N(x,y) - f_{N-1}] / [f_N - f_{N-1}].$$

•

$$\text{If } z_N(x,y) \geq f_N \text{, then } w_N(x,y) = 1.$$

The foregoing description of FIGs. 13A-13C is provided with the values of $f_i$ representing linear distances from a camera or viewer. However, in some embodiments, the focal weights $w_i(x,y)$ are calculated using an inverse of distances (e.g. a diopter scale) for values of $f_i$ and $z_i$. The equations given with respect to FIGs. 13A-13C may still be used in those embodiments, with the understanding that the smallest value of $f_i$ (e.g. $f_1$) would then represent the most distant focal plane, and the largest value of $f_i$ (e.g. $f_N$) would then represent the nearest focal plane. Such embodiments using an inverse distance scale may more readily accommodate use of a focal plane located "at infinity."

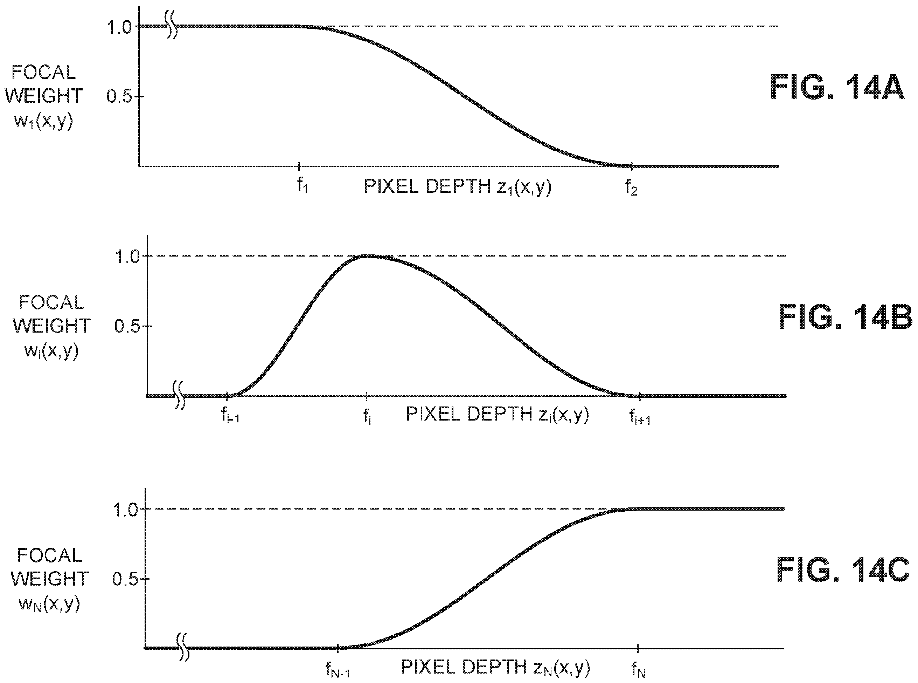

FIGs. 14A-14C are analogous to FIGs. 13A-13C, but FIGs. 14A-14C illustrate that the focal weights $w_i(x,y)$ need not be piecewise linear with respect to the depths $z_i$. The focal weights illustrated in FIGs. 14A-14C are piecewise sinusoidal with respect to the depths $z_i$, although other relationships may be implemented in other embodiments. In the embodiments of FIGs. 13A-13C and 14A-14C, among other example embodiments, $w_i$ has a maximum value at $f_i$ and either decreases or remains constant on either side of $f_i$.

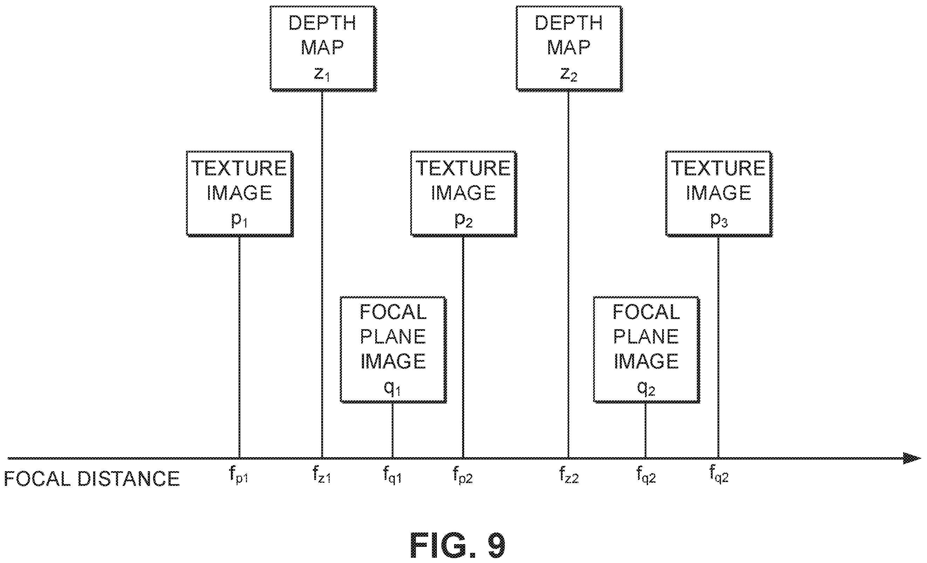

In some embodiments, it may not be the case that, for each display focal plane at focal distance $f_i$, is a single texture image captured with focal distance $f_i$ and a depth map captured with focal distance $f_i$. For example, there may be a display plane at focal distance $f_i$ but no texture image and/or depth map captured at the same focal distance $f_i$. Similarly, the depth maps and texture images may be captured with different focal distances. An example of such conditions is illustrated in FIG. 9, in which there are two different depth maps, three different texture images, and two different focal plane images, none of which have the same corresponding focal distance.

Under such conditions, image processing in some embodiments may be performed as follows. A pixel value (e.g. a luminance value or an RGB value) at a position $(x,y)$ in a focal plane image $i$ may be represented by $q_i(x,y)$. The pixel values in different display focal planes $j$ may be represented by $p_j(x,y)$. Each pixel value $q_i(x,y)$ may be calculated as follows:

$$q_i(x, y) = \sum_j w_{ij}(x, y) \cdot p_j(x, y)$$

where $w_{ij}(x, y)$ is a focal weight in a focal weight map. The weights $w_{ij}(x, y)$ in turn may be determined with the use of depth maps represented by $z_i(x,y)$. The weight $w_{ij}(x, y)$ represents the weight of a contribution from captured pixel $p_j(x, y)$ in a texture image $j$ to display pixel $q_i(x, y)$ in a focal plane image $i$.

In some embodiments, the weight is determined based on at least two factors: (i) a factor based on the difference between the focal distances of the focal plane $i$ and the captured texture image $j$, and (ii) a factor based on the level of focus of the individual pixels in the captured texture image.

The factor based on the difference between the focal distances of the focal plane $i$ and the captured texture image $j$ may have a value of 1 when focal plane $i$ and texture image $j$ both have the same focal distance, and it may be reduced for increasing differences between the focal distances.

The factor based on the level of focus of the individual pixels in the captured texture image may depend on a difference between the focal distance of the texture image and the measured depth of the captured pixel. This factor may have a value of 1 when the measured depth of the captured pixel is equal to the focal distance of the texture image, and it may be reduced otherwise. If no depth map was captured at the same focal distance as the texture image, the measured depth of the captured pixel may be determined, for example, through linear interpolation based on the depth maps with the nearest focal distances. In some embodiments, as described in greater detail below, the level of focus of individual pixels is determined using defocus maps. Such embodiments do not require the capture of use of depth maps. Using Defocus Maps for Forming Focal Weight Maps.

In some embodiments, as described above, in order for the occluded information to end up to focal planes, depth sensing is performed using an aperture with a non-negligible size instead of using a pinhole aperture. In some such embodiments, a set of depth maps may be captured using the same aperture and focal distances used to capture the depth images. In alternative embodiments, filtering of focus stack images is performed to capture information from occluded areas, which may appear in any of the focus stack images, and use it for forming extended MFPs. Such embodiments may be implemented without the use of a separate depth sensor.

In some embodiments, a focal weight map is derived for each captured texture image using a "depth from focus" approach, such as the approach described in Shaojie Zhuo, Terence Sim, "Defocus map estimation from a single image", Pattern Recognition 44 (2011), pp. 1852-1858.

In one embodiment according to the claimed invention, N defocus maps are formed, one for each texture image (e.g. using the method of Zhuo & Sim). Each defocus map covers the depth range of the entire captured view. A depth blending operation is used to form the corresponding focal weight maps. In such embodiments, the focal weight maps are determined based on a level of focus rather than on a measured depth.

In some cases, a depth blending function is symmetric, producing the same contribution whether the pixel is in front or behind of the focus (focal plane) distance. A defocus map has this property inherently.

It may be noted that focal distances are known also for the defocus images. Therefore, despite the difference in scales, the origins of the two scales are the same. In order to meet the conventions for depth maps, the defocus map may be inverted prior depth blending. This makes it essentially a focus map, showing highest values for highest focus. However, such a map may still be referred to as a defocus map.

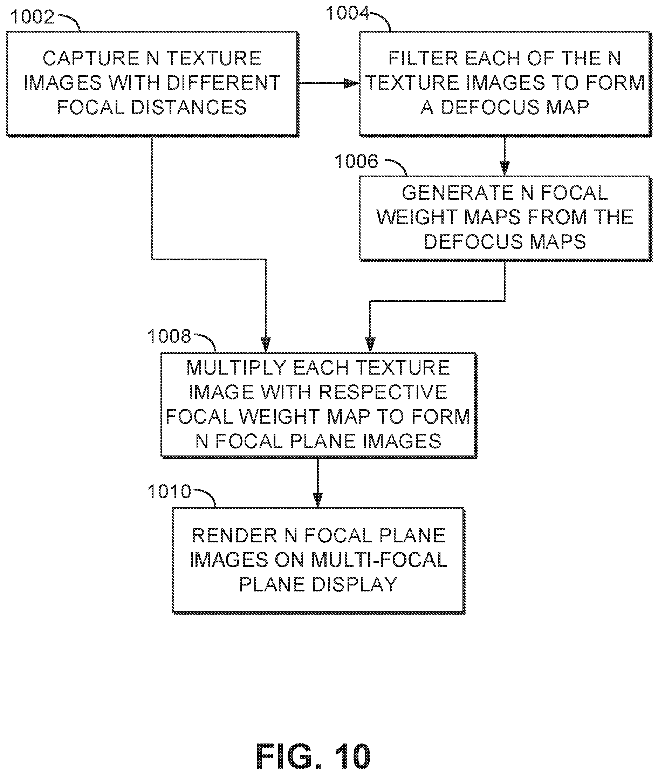

FIG. 10 illustrates one embodiment according to the claimed invention of interpreting a (de)focus map as a depth map, and decomposing the test image into three MFPs using linear filters. At 1002, N different texture images are captured with different focal distances. At 1004, each of the texture images is filtered to form a corresponding defocus map. The generation of the defocus map may make use of camera parameters such as aperture and focal length. At 1006, N focal weight maps are generated from the defocus maps. At 1008, each texture image is multiplied with a respective focal weight map to form a total of N focal plane images. In step 1010, the focal plane images are rendered on a multi-focal-plane display.

Focal weight maps generated through the use of defocus planes may largely correspond to focal weight maps generated using depth maps, except by scale, which for a defocus map is not necessarily linear with respect to distance. While this difference is not believed to have significant effects, in some embodiments, it may be desirable for the luminance scale of the defocus map to be linearized. As described in Zhuo & Sim, linearization may be performed with knowledge of camera parameters when capturing texture images.

**Using Filtering and Redistribution for Forming Multiple Focal Planes.**

In some embodiments, focal plane images are formed with the use of filtering and redistribution.

Filtering and redistribution may reduce disocclusions when producing MFPs that support viewpoint changes (e.g. motion parallax and/or generation of stereoscopic views). Redistribution operates to separate and redistribute by filtering high and low frequency components of each focal plane image. High frequencies are kept at the same level/distance they appear, but low frequency components are distributed among focal plane images. Redistribution of low frequency components is feasible because they make only a minor contribution to depth cues in human visual system.

In some embodiments, a stack of texture images is captured by different focal distances, and the positions in depth for high frequencies are implied by the known focal distances. Information from occluded areas is captured to MFPs, benefits of redistribution are obtained, and no depth map or depth blending is used. In some embodiments, large aperture images are used so as to capture information from occluded areas. The aperture diameter may be on the order of several centimeters. Filtering and redistribution may be implemented in a way that this information ends up to the redistributed MFPs; filtering is the same over whole image areas, thus not possibly excluding information captured from the occluded areas. The result does not seem to suffer from the fact that the occluded areas near edges may be seen through the occluding texture, changing the luminance of corresponding pixels.

There may be a practical limit for the optimum aperture size, correlating with information overlap around the edges. In addition to limiting the aperture size as a solution, an image-processing based solution may be implemented to show the disoccluded information only when it is revealed from behind edges, for example when shifting focal planes with respect to each other for a virtual viewpoint (the amount of shift determining which pixels are either revealed or covered).

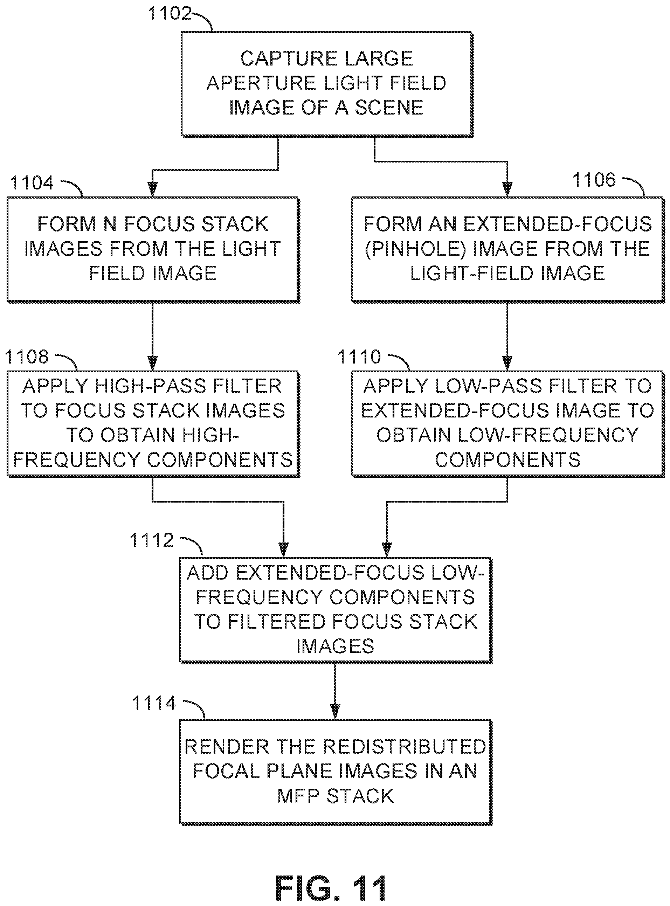

An example of one such method is illustrated in FIG. 11. At 1102, a large aperture light field is captured from a real or synthetic scene. At 1104 N focus stack images are generated from the light field image, each with a different focal distance. At 1106, an extended-focus image (e.g. a "pinhole" style image) is generated from the light-field image. At 1108, a high-pass filter is applied to the focus stack images to obtain high-frequency image components. At 1110, a low-pass filter is applied to the extended-focus image to obtain low-frequency image components. At 1112, the low-frequency image components from the extended-focus image are added to the filtered (high-frequency) focus stack images, possibly with a scaling factor such as 1/N. At 1114, the redistributed focal plane images, which now include both high-frequency components (from the original focus stack images) and low-frequency components (from the extended-focus image), are rendered. In some embodiments, the stack of focal plane images may be shifted relative to one another to generate stereoscopic views of the scene and/or to emulate motion parallax. The distribution of the low-frequency components among the different focal plane image allows for a substantial amount of shifting before any gaps or voids in the image become visible.

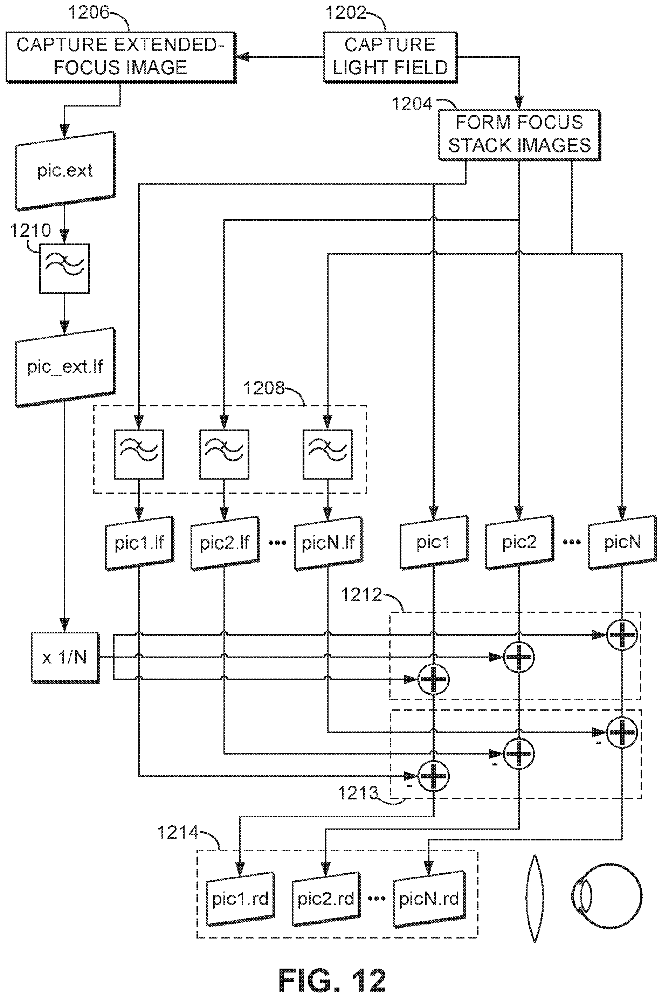

FIG. 12 illustrates another technique for generating focal plane images from a light field using filtering. At 1202, a large aperture light field is captured from a real or synthetic scene. At 1204 N focus stack images pic1 ... picN are generated from the light field image, each with a different focal distance. At 1206, an extended-focus image (e.g. a "pinhole" style image) pic . ext is generated from the light-field image. (In some embodiments, the extended-focus image may be formed from separate focus captures with different focal distances) At 1208, a low-pass filter is applied to the focal plane images to obtain low-frequency image components pic1.lf ... picN.lf. At 1210, a low-pass filter is applied to the extended-focus image to obtain low-frequency image components pic_ext.lf. At 1212, the low-frequency image components from the extended-focus image are added to the focal plane images, possibly with a scaling factor such as 1/N. The resulting images now include both their original low-frequency components and the low-frequency contribution from pic_ext.lf; thus, at 1213, the low-pass filtered images pic1.lf ... picN.lf are subtracted to generate redistributed focal plane images pic1.rd ... picN. rd. These redistributed focal plane images are displayed to a user at 1214. In some embodiments, the stack of focal plane images may be shifted relative to one another to generate stereoscopic views of the scene and/or to emulate motion parallax. The distribution of the low-frequency components among the different focal plane image allows for a substantial amount of shifting before any gaps or voids in the image become visible.

In some such embodiments, low-pass filtering is performed using Gaussian filtering. In the example of FIG. 12, the low-pass filtering of the focal plane images (at 1208), followed by subtracting the low-pass filtered images from the original images (at 1213) has the effect of high-pass filtering. In alternative embodiments, the high-pass filtering of the focal plane images is performed explicitly.

**Signaling Multiple Depth and** Focal Images.

Embodiments described herein may use multiple depth maps and focus images corresponding to a single time instant. In some embodiments, techniques are used for efficient storage and/or communication of depth maps and focal plane images.

*Associating Depth and Focal Images.*

In some cases, the focal lengths of the depth captures may differ from focal lengths of image captures. The resolution of the depth map may differ, generally having a lower resolution than that of the image captures. In some embodiments, during upsampling of the depth map, edge maps in image maps may be used to provide information to refine the depth edges. Depth maps may be signaled at a different frame rate and interpolated to the image frame rate. Depth maps may also have a different bit-depth and mapping of image value to depth value.

In many cases, a depth map may have little detail, except around the edges of objects. In some embodiments, the resolution of a depth map may be reduced for communication and then resized to full resolution prior to use in calculating the depth weighting functions. When upsampling the depth map for a specific focal depth value, the existence of a high-resolution image capture may be used to guide the interpolation around edges. In many cases, the depth map is a single channel image, no color, and the bit depth may be relatively low. The relation between bit-depth and actual distance may be expressed via a transfer function.

*Video Sequence Level Parameters.*

Given possible differences between focal plane images and depth maps such as bit-depth, spatial resolution, temporal frame rate and focal length values, a coded video sequence that includes multiple focal images and depth maps may provide these parameter values independently for both the focal images and the depth maps. A description of sequence level parameters is shown in Table 1.

**Table 1. Multifocal image sequence information parameters.**

| multifocal_image_sequence_info( payloadSize ) { | Descriptor |
|---|---|
| **num_focal_images** | u(8) |
| **focal_images_fps** | u(8) |
| **focal_images_height** | u(8) |
| **focal_images width** | u(8) |
| **focal_images bit_depth** | u(8) |
| **focal_images_num_color_planes** | u(2) |
| for (f = 0; f < num_focal_images;f++ ) { | |
| **focal_distance**[f ] | ue(v) |
| } | |
| **num_depth_maps** | u(8) |
| **depth_map_fps** | u(8) |
| **depth_map_height** | u(8) |
| **depth_map_width** | u(8) |
| **depth_map_bit_depth** | u(3) |
| for( m = 0; m < num_depth_maps;m++ ) { | |
| **depth_distance**[f ] | ue(v) |

(continued)

| | |
|---|---|
| } | |

Focal image sequence level parameters are constant over the sequence and describe characteristics common to all focal images of the time sequence.

**num_focal_images** : number of focal images corresponding to a single frame time.
**focal_images_fps** : frame rate of sequence of focal images defines the time offset between images corresponding to the same focal distance.
**focal_images_height** : spatial height in pixels of each focal image.
**focal_images_width** : spatial width in pixels of each focal image.
**focal_images bit_depth** : bit depth of the samples of each focal image.
**focal_images_num_color_planes** : describes number of color planes, e.g. 3 for RGB or YUV sequence.
**focal_distance**[f ] : each entry of this array gives the focal distance corresponding to the index of the focal image.

Depth map sequence level parameters are constant over the sequence and describe the characteristics common to the depth maps of the sequence.

**num_depth_maps** : number of depth maps corresponding to a single frame time. Possibly different from the number of focal images.
**depth_maps_fps** : frame rate of sequence of depth maps defines the time offset between images corresponding to the same depth distance.
**depth_maps_height** : spatial height in pixels of each depth map.
**depth_maps_width** : spatial width in pixels of each depth map.
**depth_maps_bit_depth** : bit depth of the samples of each depth map image.
**depth_map_distance**[f ] : each entry of this array gives the distance value corresponding to the index of the depth map. This is the distance corresponding to the focal length used in recording the depth map.

*Frame Level Parameters.*

Individual frames in the video sequence may indicate their type focal image or depth map, index a relevant sequence level parameter set and additionally indicate the time offset, via a picture count, and indicate an index into a focal_distance or depth_map_distance value. These frame level parameters are illustrated in Table 2 and Table 3.

**Table 2. Focal image single frame parameters.**

| multifocal_image_frame_info( payloadSize ) { | **Descriptor** |
|---|---|
| **sequence_id** | u(8) |
| **frame_count** | u(8) |
| **focal_distance_index** | u(8) |

Frame level parameters for a single focal image are described below:

**sequence_id** : refers to a single sequence parameter set, used in the event of multiple sequence parameter sets.
**frame_count** : describes temporal location of focal image within the sequence of frames. **focal_distance_index :** index into the sequence level list of focal distance values.

**Table 3. Depth map single frame parameters.**

| multifocal_depth_map_frame_info( payloadSize ) { | **Descriptor** |
|---|---|
| **sequence_id** | u(8) |
| **frame_count** | u(8) |
| **depth_map_distance_index** | u(8) |

Frame level parameters for a single depth map are described below:

> **sequence_id :** refers to a single sequence parameter set, used in the event of multiple sequence parameter sets.
> **frame_count** : describes temporal location of focal image within the sequence of frames.
> **depth_map_distance_index :** index into the sequence level list of depth map distance values.

*Use* of *Inter Image Prediction in Coding Focal Plane Images.*

Correlation between images captured under different focal conditions may be exploited via inter image prediction using techniques analogous to those of SNR scalability where quality is varied but the resolution is unchanged. In some embodiments, the correlation between different focal captures of the same scene is exploited by signaling one focal capture image and signaling the difference between this first focal capture image and a second focal capture image.

*Use* of *Inter Depth Map Prediction in Coding.*

Correlation between depth maps may be used to reduce the bandwidth needs. Similarly to the signaling of a single base focal image and additional focal images via residual, the multiple depth maps with different focal captures may be efficiently signaled by predicting between depth maps.

**Additional Features in Some Embodiments.**

In some embodiments, the number and position for the formed focal planes are the same as for the captured texture images. In case the number and/or the positions are different, the texture images may first be blended to the nearest focal planes according to their distances from corresponding focal plane positions.

It is worth noticing, that in various MFP approaches, depth maps are used to separate or decompose a scene information/pixels to a number of depth ranges, used for forming the corresponding focal plane. Instead of a depth map, other depth dependent mapping criteria may be used for the separation. An embodiment according to the claimed invention, for the depth-dependent mappings is described above with respect to the use of defocus maps for the purpose. Defocus maps resemble depth maps, but instead of depth sensing, they are based on image blur, which may be detected through filtering of the images.

A further criterion used in some embodiments for the separation is to use depth-of-field. However, depth-of-field follows relatively complicated 3D and optical geometry mathematics. DoF shows up in the images as an area (hyperplane) with pixels in focus, while the outside areas are correspondingly defocused. By using proper filtering to detect focused areas, calculating DoF can be replaced by detecting focused areas by filtering.

In embodiments that perform redistribution of spatial frequency components, a stack of texture images is captured by different focal distances, and the positions in depth for high frequencies are implied by the known focal distance, which is now used as the criterion for allocating information in depth. Furthermore, filtering is used to detect a set of complementary DoFs and corresponding focus stack images, covering the whole captured volume both in depth and for focused information. The number and position of focal images may be determined mathematically so that most of the in-focus details (high frequencies) of the scene are captured.

In some embodiments, a method includes obtaining a plurality of texture images of a scene, each texture image having a different respective focal distance; and for each texture image, generating a focal plane image by (i) determining a corresponding weight for each of a plurality of pixels of the texture image, wherein the weight represents an amount by which the pixel is in focus, and (ii) multiplying a pixel value of each of the plurality of pixels by the corresponding weight. The focal plane images may be displayed in a multi-focal-plane display, e.g. substantially simultaneously or in a time-multiplexed fashion (e.g. serially).

In some embodiments, a method includes obtaining a plurality of texture images $p_i$ of a scene, each texture image having a different respective focal distance $d_i$; and for each texture image $p_i$, generating a focal plane image $q_i$ by (i) determining a corresponding weight $w_i$ for each of a plurality of pixels of the texture image, wherein the weight $w_i(x,y)$ represents an amount by which the pixel $(x,y)$ is in focus, and (ii) multiplying each pixel value $p_i(x,y)$ of the texture image $p_i$ by the respective weight $w_i(x,y)$ to generate the focal plane image $q_i$ such that $q_i(x,y)=p_i(x,y) \cdot w_i(x,y)$.

The amount by which a pixel in a texture image is in focus may be determined based at least in part on a difference between a depth value $z_i(x,y)$ corresponding to the pixel and the focal distance $d_i$ of the texture image that includes the pixel.

In some embodiments, for each texture image, a depth image $z_i(x,y)$ of the scene is obtained. For each texture image $p_i(x,y)$, the weights $w_i(x,y)$ are determined by a function $w_i[z_i(x,y)]$. In some embodiments, a single depth image may be obtained for use with all texture images, and $z_i(x,y)$ may be the same for all values of i. In some embodiments, $w_i[z_i(x,y)]$ has a maximum value at $w_i[d_i]$.

In some embodiments, obtaining a plurality of texture images comprises: receiving an initial set of texture images at a display device having a plurality of display focal planes, each display focal plane having a different respective focal distance; and selecting from the initial set of texture images a selected set of texture images $p_i$ having focal distances corresponding to the focal distances of the display focal planes (e.g. having the same focal distances, or the nearest focal distances). Each selected texture image $p_i$ may have a focal distance $d_i$ equal to the focal distances of one of the display focal planes.

In some embodiments, a method of providing a multi-layered image of a scene comprises: for each of a plurality of different focal distances (i) capturing a texture image of the scene focused at the respective focal distance and (ii) capturing a depth image of the scene focused at the respective focal distance (e.g. using a time-of-flight camera); and transmitting the captured texture images and depth images. Each texture image and the respective corresponding depth image may be captured substantially simultaneously. Each texture image and the respective corresponding depth image are captured with the same optics. In some embodiments, the captured texture images and depth images are encoded in a bitstream, and transmitting the captured texture images and depth maps comprises transmitting the encoded bitstream. In some such embodiments, encoding the captured texture images and depth images comprises using at least a first one of the texture images as a predictor for encoding of at least a second one of the texture images. In some embodiments, encoding the captured texture images and depth images comprises using at least one of the texture images as a predictor for encoding of at least one of the depth images.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining a plurality of texture images of a scene, each texture image having a different respective focal distance;
   filtering each texture image of the plurality of texture images to form a corresponding defocus map for each texture image;
   for each texture image of the plurality of texture images and for each corresponding defocus map, generating a corresponding focal weight map from the defocus map,
   wherein each corresponding focal weight map comprises a plurality of focal weights representing an amount by which each respective pixel of a plurality of pixels of the corresponding texture image is in focus, the focal weights for the pixels in the texture image being determined based on the corresponding defocus map; and
   for each texture image of the plurality of texture images, generating a corresponding focal plane image by multiplying the texture image by the focal weight map, wherein multiplying the texture image by the focal weight map comprises multiplying a pixel value of each of the plurality of pixels of the texture image by the corresponding focal weight of the plurality of focal weights of the focal weight map.

2. The method of claim 1, further comprising displaying the focal plane images at the respective focal distance thereof in a multi-focal-plane display.

3. The method of claim 2, wherein the focal plane images are displayed substantially simultaneously.

4. The method of any one of claims 2 or 3, further comprising selecting, for each of the focal plane images, a respective texture image from the plurality of texture images.

5. The method of claim 1, wherein obtaining a plurality of texture images comprises capturing each of the plurality of texture images at the respective focal distance.

6. The method of claim 1, wherein generating each of the corresponding focal weight maps is further based on a level of focus of the respective texture image.

7. The method of any one of claims 1-6, further comprising generating a virtual viewpoint by shifting at least one of the focal plane images by an amount inversely proportional to the display focal distance of the respective focal plane image.

8. The method of claim 7, further comprising displaying the generated virtual viewpoint as one of a stereo pair of viewpoints.

9. The method of claim 7, further comprising displaying the generated virtual viewpoint in response to viewer head motion to emulate motion parallax.

10. A system comprising a processor and a computer-readable medium storing instructions, that when executed, are operative to cause the system to perform a method according to any of claims 1-9.

**Patentansprüche**

1. Verfahren, das umfasst:

Erhalten mehrerer Texturbilder einer Szene, wobei jedes Texturbild eine andere jeweilige Brennweite aufweist;
Filtern jedes Texturbildes der mehreren Texturbilder, um eine entsprechende Defokussierungskarte für jedes Texturbild zu bilden;
für jedes Texturbild der mehreren Texturbilder und für jede entsprechende Defokussierungskarte, Generieren einer entsprechenden Brennpunktgewichtskarte aus der Defokussierungskarte,
wobei jede entsprechende Brennpunktgewichtskarte mehrere Brennpunktgewichte umfasst, die einen Betrag darstellen, um den jedes jeweilige Pixel von mehreren Pixeln des entsprechenden Texturbildes scharf gestellt ist, wobei die Brennpunktgewichte für die Pixel in dem Texturbild auf der Grundlage der entsprechenden Defokussierungskarte bestimmt werden; und
für jedes Texturbild der mehreren Texturbilder, Generieren eines entsprechenden Brennebenenbildes durch Multiplizieren des Texturbildes mit der Brennpunktgewichtskarte, wobei das Multiplizieren des Texturbildes mit der Brennpunktgewichtskarte das Multiplizieren eines Pixelwertes jedes der mehreren Pixel des Texturbildes mit dem entsprechenden Brennpunktgewicht der mehreren Brennpunktgewichte der Brennpunktgewichtskarte umfasst.

2. Verfahren nach Anspruch 1, das des Weiteren das Anzeigen der Brennebenenbilder mit ihrer jeweiligen Brennweite auf einem Mehrfachbrennebenen-Display umfasst.

3. Verfahren nach Anspruch 2, wobei die Brennebenenbilder im Wesentlichen gleichzeitig angezeigt werden.

4. Verfahren nach einem der Ansprüche 2 oder 3, das des Weiteren das Auswählen, für jedes der Brennebenenbilder, eines jeweiligen Texturbildes aus den mehreren Texturbildern umfasst.

5. Verfahren nach Anspruch 1, wobei das Erhalten mehrerer Texturbilder das Aufnehmen jedes der mehreren Texturbilder mit der jeweiligen Brennweite umfasst.

6. Verfahren nach Anspruch 1, wobei das Generieren jeder der entsprechenden Brennpunktgewichtskarten des Weiteren auf einem Fokussierungsniveau des jeweiligen Texturbildes basiert.

7. Verfahren nach einem der Ansprüche 1-6, das des Weiteren das Generieren eines virtuellen Blickpunkts durch Verschieben mindestens eines der Brennebenenbilder um einen Betrag, der sich umgekehrt proportional zur Display-Brennweite des jeweiligen Brennebenenbildes verhält, umfasst.

8. Verfahren nach Anspruch 7, das des Weiteren das Anzeigen des generierten virtuellen Blickpunkts als einen von einem Stereopaar von Blickpunkten umfasst.

9. Verfahren nach Anspruch 7, das des Weiteren das Anzeigen des generierten virtuellen Blickpunkts in Reaktion auf eine Kopfbewegung eines Betrachters umfasst, um eine Bewegungsparallaxe zu emulieren.

10. System, umfassend einen Prozessor und ein computerlesbares Medium, das Instruktionen speichert, die, wenn sie ausgeführt werden, geeignet sind, das System zu veranlassen, ein Verfahren nach einem der Ansprüche 1 bis 9 durchzuführen.

**Revendications**

1. Procédé comprenant :

   l'obtention d'une pluralité d'images de texture d'une scène, chaque image de texture présentant une distance focale respective différente ;
   le filtrage de chaque image de texture parmi la pluralité d'images de texture pour former une carte de défocalisation correspondante pour chaque image de texture ;
   pour chaque image de texture parmi la pluralité d'images de texture et pour chaque carte de défocalisation correspondante, la génération d'une carte de poids focaux correspondante à partir de la carte de défocalisation, dans lequel chaque carte de poids focaux correspondante comprend une pluralité de poids focaux représentant une quantité de laquelle chaque pixel respectif parmi une pluralité de pixels de l'image de texture correspondante est mis au point, les poids focaux pour les pixels dans l'image de texture étant déterminés sur la base de la carte de défocalisation correspondante ; et
   pour chaque image de texture parmi la pluralité d'images de texture, la génération d'une image de plan focal correspondante par la multiplication de l'image de texture par la carte de poids focaux, dans lequel la multiplication de l'image de texture par la carte de poids focaux comprend la multiplication d'une valeur de pixel de chacun de la pluralité de pixels de l'image de texture par le poids focal correspondant parmi la pluralité de poids focaux de la carte de poids focaux.

2. Procédé selon la revendication 1, comprenant en outre l'affichage des images de plan focal à la distance focale respective de celles-ci dans un affichage à plusieurs plans focaux.

3. Procédé selon la revendication 2, dans lequel les images de plan focal sont affichées sensiblement simultanément.

4. Procédé selon la revendication 2 ou 3, comprenant en outre la sélection, pour chacune des images de plan focal, d'une image de texture respective parmi la pluralité d'images de texture.

5. Procédé selon la revendication 1, dans lequel l'obtention d'une pluralité d'images de texture comprend la capture de chacune de la pluralité d'images de texture à la distance focale respective.

6. Procédé selon la revendication 1, dans lequel la génération de chacune des cartes de poids focaux correspondantes est en outre basée sur un niveau de mise au point de l'image de texture respective.

7. Procédé selon l'une quelconque des revendications 1 à 6, comprenant en outre la génération d'un point de vue virtuel en déplaçant au moins l'une des images de plan focal d'une quantité inversement proportionnelle à la distance focale d'affichage de l'image de plan focal respective.

8. Procédé selon la revendication 7, comprenant en outre l'affichage du point de vue virtuel généré comme l'un d'une paire stéréo de points de vue.

9. Procédé selon la revendication 7, comprenant en outre l'affichage du point de vue virtuel généré en réponse à un déplacement de tête de spectateur pour émuler une parallaxe de mouvement.

10. Système comprenant un processeur et un support lisible par ordinateur stockant des instructions qui, lorsqu'elles sont exécutées, sont fonctionnelles pour amener le système à réaliser un procédé selon l'une quelconque des revendications 1 à 9.

**FIG. 1A**

EP 4 270 944 B1

116

122

102

**120**
Transceiver

**124**
Speaker/
Microphone

**126**
Keypad

**128**
Display/
Touchpad

**118**
Processor

**134**
Power
Source

**136**
GPS
Chipset

**138**
Peripherals

**130**
Non-
Removable
Memory

**132**
Removable
Memory

# FIG. 1B

**FIG. 2**

**FIG. 3A**

302

**FIG. 3B**

304

**FIG. 3C**

306

**FIG. 3D**

308

muntin

402

FIG. 4A

404

FIG. 4B

406

FIG. 4C

408

FIG. 4D

FIG. 5A

FIG. 5B

FIG. 5C

FIG. 6A

FIG. 6B

FIG. 6C

**FIG. 7**

802

CAPTURE N TEXTURE
IMAGES WITH DIFFERENT
FOCAL DISTANCES

804

GENERATE A SEPARATE
DEPTH MAP FOR EACH OF
THE N TEXTURE IMAGES

806

GENERATE N FOCAL
WEIGHT MAPS FROM THE
DEPTH MAPS

808

MULTIPLY EACH TEXTURE
IMAGE WITH RESPECTIVE
FOCAL WEIGHT MAP TO FORM N
FOCAL PLANE IMAGES

810

RENDER N FOCAL PLANE
IMAGES ON MULTI-FOCAL
PLANE DISPLAY

# FIG. 8

**FIG. 9**

EP 4 270 944 B1

1002

CAPTURE N TEXTURE
IMAGES WITH DIFFERENT
FOCAL DISTANCES

1004

FILTER EACH OF THE N
TEXTURE IMAGES TO FORM
A DEFOCUS MAP

1006

GENERATE N FOCAL
WEIGHT MAPS FROM THE
DEFOCUS MAPS

1008

MULTIPLY EACH TEXTURE
IMAGE WITH RESPECTIVE
FOCAL WEIGHT MAP TO FORM
N FOCAL PLANE IMAGES

1010

RENDER N FOCAL PLANE
IMAGES ON MULTI-FOCAL
PLANE DISPLAY

# FIG. 10

1102

CAPTURE LARGE
APERTURE LIGHT FIELD
IMAGE OF A SCENE

1104

FORM N FOCUS STACK
IMAGES FROM THE LIGHT
FIELD IMAGE

1106

FORM AN EXTENDED-FOCUS
(PINHOLE) IMAGE FROM THE
LIGHT-FIELD IMAGE

1108

APPLY HIGH-PASS FILTER
TO FOCUS STACK IMAGES
TO OBTAIN HIGH-
FREQUENCY COMPONENTS

1110

APPLY LOW-PASS FILTER TO
EXTENDED-FOCUS IMAGE TO
OBTAIN LOW-FREQUENCY
COMPONENTS

1112

ADD EXTENDED-FOCUS LOW-
FREQUENCY COMPONENTS
TO FILTERED FOCUS STACK
IMAGES

1114

RENDER THE REDISTRIBUTED
FOCAL PLANE IMAGES IN AN
MFP STACK

FIG. 11

**FIG. 12**

FIG. 13A

FIG. 13B

FIG. 13C

FIG. 14A

FIG. 14B

FIG. 14C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62694722

**Non-patent literature cited in the description**

- **K. AKELEY et al.** A Stereo Display Prototype with Multiple Focal Distances. *ACM Transactions on Graphics (TOG)*, August 2004, vol. 23 (3), 804-813
- **HU, X.** ; **HUA, H.** Design and assessment of a depth-fused multi-focal-plane display prototype.. *IEEE/OSA Journal of Display Technology*, 2014, vol. 10 (4), 308-316
- **J. P. ROLLAND et al.** Multifocal planes head-mounted displays. *Appl. Opt.*, 2000, vol. 39, 3209-3215
- **HONNUNGAR et al.** Focal-sweep for Large Aperture Time-of-Flight Cameras. *IEEE International Conference on Image Processing (ICIP)*, 2016, 953-957
- **SHAOJIE ZHUO** ; **TERENCE SIM**. Defocus map estimation from a single image. *Pattern Recognition*, 2011, vol. 44, 1852-1858
- **KURT AKELEY** ; **SIMON J. WATT** ; **AHNA REZA GIRSHICK** ; **MARTIN S. BANKS**. A Stereo Display Prototype with Multiple Focal Distances. *ACM Transactions on Graphics (TOG)*, August 2004, vol. 23 (3), 804-813